# EUROPÄISCHE PATENTSCHRIFT

(11) **EP 3 875 736 B1**
(45) Veröffentlichungstag und Bekanntmachung des Hinweises auf die Patenterteilung: **12.02.2025**
(21) Anmeldenummer: 21160256.0
(22) Anmeldetag: 02.03.2021
(51) Int. Cl.: F01D 11/00, F01D 9/04, F01D 9/06

(54) **DICHTUNGSVORRICHTUNG FÜR EINE STRÖMUNGSMASCHINE, DICHTUNGSTRÄGERRINGELEMENT FÜR EINE DICHTUNGSVORRICHTUNG UND STRÖMUNGSMASCHINE**
SEALING DEVICE FOR A TURBOMACHINE, CARRIER RING FOR A SEALING DEVICE AND TURBOMACHINE
DISPOSITIF D'ÉTANCHÉITÉ POUR UNE TURBOMACHINE, BAGUE DE SUPPORT POUR UN DISPOSITIF D'ÉTANCHÉITÉ ET TURBOMACHINE

(30) Priorität: 06.03.2020 DE 102020202862
(43) Veröffentlichungstag der Anmeldung: 08.09.2021
(73) Patentinhaber: MTU Aero Engines AG, 80995 München (DE)
(72) Erfinder: Schmidt-Petersen, Julia, 80995 München (DE); Schlemmer, Markus, 80995 München (DE)

(56) Entgegenhaltungen:
- EP-A1- 2 824 282
- EP-A1- 3 121 379
- US-A1- 2019 368 360
- US-A1- 2019 390 558

## Beschreibung

Die Erfindung betrifft eine Dichtungsvorrichtung für eine Strömungsmaschine, mit wenigstens einer Leitschaufelkomponente, welche zumindest ein Innendeckbandelement und wenigstens ein mit dem zumindest einen Innendeckbandelement verbundenes Schaufelelement umfasst, und mit zumindest einer Dichtungskomponente, welche zumindest ein mit der wenigstens einen Leitschaufelkomponente gekoppeltes Dichtungsträgerringelement aufweist. Weitere Aspekte der Erfindung betreffen ein Dichtungsträgerringelement für eine Dichtungsvorrichtung sowie eine Strömungsmaschine.

Zur Optimierung des Wirkungsgrads von Strömungsmaschinen, beispielsweise Gasturbinen, ist es besonders sinnvoll, Leckageströmungen zwischen einem rotierenden Rotor und der feststehenden Dichtungsvorrichtung zu minimieren. Hierbei wird insbesondere ein Leckagespalt zwischen radial innenliegenden, also mit anderen Worten im Bereich zwischen in Radialrichtung der Dichtungsvorrichtung innen liegenden Enden feststehender Leitschaufeln und dem sich drehenden Rotor abgedichtet. Die Dichtungskomponente wird über einen beispielsweise durch einen Niet oder Bolzen befestigten Gleitstein an der Leitschaufelkomponente gesichert und damit festgelegt. Eine Dichtungskomponente zur Abdichtung des Leckagespalts zwischen den radial innenliegenden Enden der feststehenden Leitschaufeln und dem sich drehenden Rotor kann auch als "inner air seal" bezeichnet werden.

Leitschaufelkomponenten sind aus den Dokumenten US2019390558A1, EP2824282A1, EP3121379A1, US2019368360A1 bekannt.

Aufgabe der vorliegenden Erfindung ist es, eine Dichtungsvorrichtung, ein Dichtungsträgerringelement sowie eine Strömungsmaschine der eingangs genannten Art zu schaffen, welche ein besonders geringes Gewicht aufweisen und aufwandsarm hergestellt werden können.

Diese Aufgabe wird durch eine Dichtungsvorrichtung mit den Merkmalen des Patentanspruchs 1, durch ein Dichtungsträgerringelement mit den Merkmalen des Patentanspruchs 11 sowie durch eine Strömungsmaschine mit den Merkmalen des Patentanspruchs 13 gelöst. Vorteilhafte Ausgestaltungen mit zweckmäßigen Weiterbildungen der Erfindung sind in den jeweiligen Unteransprüchen angegeben.

Ein erster Aspekt der Erfindung betrifft eine Dichtungsvorrichtung für eine Strömungsmaschine, mit wenigstens einer Leitschaufelkomponente, welche zumindest ein Innendeckbandelement und wenigstens ein mit dem zumindest einen Innendeckbandelement verbundenes Schaufelelement umfasst, und mit zumindest einer Dichtungskomponente, welche zumindest ein mit der wenigstens einen Leitschaufelkomponente gekoppeltes Dichtungsträgerringelement aufweist. Das zumindest eine Schaufelelement kann insbesondere als Schaufelblatt ausgebildet sein und als Leitschaufel bezeichnet werden. Die Dichtungskomponente kann auch als "innere Luft-Dichtung" oder als "inner air seal", abgekürzt "IAS", bezeichnet werden. Die Dichtungskomponente kann zur Abdichtung eines Leckagespaltes zwischen der Leitschaufelkomponente und einem Rotor, insbesondere Laufschaufeln des Rotors, der Strömungsmaschine ausgebildet sein. Die Dichtungskomponente kann hierzu einen Einlaufbelag umfassen. Der Einlaufbelag kann den Leckagespalt in Radialrichtung der Dichtungsvorrichtung begrenzen. Der Einlaufbelag kann also beim bestimmungsgemäßen Gebrauch der Dichtungsvorrichtung unmittelbar in Radialrichtung der Dichtungsvorrichtung an den Leckagespalt angrenzen.

Gemäß der Erfindung ist vorgesehen, dass das wenigstens eine Dichtungsträgerringelement zumindest ein Ringkörperelement und wenigstens einen Vorsprung umfasst, welcher einteilig, insbesondere einstückig, monolithisch und/oder integral mit dem zumindest einen Ringkörperelement verbunden ist, in Radialrichtung der Dichtungsvorrichtung von dem zumindest einen Ringkörperelement abragt und in zumindest eine Öffnung der wenigstens einen Leitschaufelkomponente eingeführt ist. Dies ist von Vorteil, da durch die einteilige Verbindung zwischen dem Ringkörperelement und dem wenigstens einen Vorsprung besonders wenige Einzelteile zur Montage der Dichtungsvorrichtung benötigt werden, wodurch die Dichtungsvorrichtung besonders aufwandsarm hergestellt werden kann. Der wenigstens eine Vorsprung kann insbesondere radial, also in Radialrichtung der Dichtungsvorrichtung, von dem Ringkörper abragen. Der Vorsprung kann auch als Nase bezeichnet werden. Die zumindest eine Öffnung kann sich vorzugsweise durch das zumindest eine Innendeckbandelement erstrecken. Bevorzugt kann die Öffnung auch als Tasche, also beispielsweise als Einsenkung, welche sich zumindest bereichsweise in Radialrichtung durch die Leitschaufelkomponente, insbesondere durch das Innendeckbandelement, erstrecken kann, ausgebildet sein. Eine sich durch die Leitschaufelkomponente, insbesondere durch das Innendeckband, erstreckende Öffnung oder Tasche kann besonders aufwandsarm hergestellt werden. Die Öffnung kann insbesondere als Montageöffnung bezeichnet werden. Entsprechend kann die Tasche auch als Montagetasche bezeichnet werden.

Bei der Leitschaufelkomponente sind das oder die Schaufelelemente, insbesondere ein oder mehrerer Leitschaufelblätter, und das insbesondere gemeinsame Innendeckbandelement, insbesondere Innendeckbandsegment, vorzugsweise einstückig, integral und/oder monolithisch miteinander verbunden und/oder ausgebildet, beispielsweise als ein gemeinsames Stück gegossen.

Die vorzugsweise integral ausgebildete Leitschaufelkomponente kann insbesondere ein Leitschaufelcluster oder Leitschaufelclustersegment sein, das eine oder mehrere Leitschaufeln, z.B. genau eine, genau zwei, genau drei, genau vier, genau fünf, genau sechs oder genau sieben oder mehr umfasst und das einen Teil oder ein Segment eines Leitschaufelkranzes bildet oder dazu vorgesehen ist.

Besonders bevorzugt ist das Dichtungsträgerringelement frei von in Axialrichtung der Dichtungsvorrichtung neben dem Vorsprung angeordneten Zusatz-Vorsprüngen. Somit kann vorgesehen sein, dass nur der wenigstens eine Vorsprung in die zumindest eine Öffnung ragt. Weist das Dichtungsträgerringelement also mehrere, mit dem Ringkörperelement verbundene Vorsprünge auf, so können diese Vorsprünge insbesondere in einer Reihe angeordnet sein, wobei darauf verzichtet werden kann, dass in Axialrichtung der Dichtungsvorrichtung neben den Vorsprüngen noch die entsprechenden Zusatz-Vorsprünge angeordnet sind.

Das zumindest eine Innendeckbandelement und das zumindest eine Ringkörperelement können bevorzugt in Radialrichtung aneinander, insbesondere unmittelbar aneinander, abgestützt sein. Dadurch kann einem etwaigen Verkippen zwischen dem Innendeckbandelement und dem Ringkörperelement besonders zuverlässig entgegengewirkt werden.

Das Dichtungsträgerringelement kann auch als Dichtungsträgerring bezeichnet werden und eine Mehrzahl an Vorsprüngen aufweisen. Das Innendeckbandelement kann eine Mehrzahl an Öffnungen aufweisen. Die Vorsprünge sowie die Öffnungen können jeweils in Umfangsrichtung der Dichtungsvorrichtung aneinandergereiht, insbesondere kreisförmig aneinandergereiht, sein. Unter dem Ausdruck "kreisförmig" kann im Rahmen der vorliegenden Offenbarung verstanden werden, dass die Vorsprünge - analog zu einem Lochkreis - gemeinsam einen Kreis bilden können. So kann es beispielsweise vorgesehen sein, dass das Dichtungsträgerringelement beispielsweise 20 Vorsprünge aufweist, welche in Umfangsrichtung kreisförmig aneinandergereiht sind und von welchen jeder Vorsprung in jeweils eine von 20 Öffnungen an dem Innendeckbandelement eingeführt sein kann. So kann also in jeweils einer der Öffnungen jeweils einer der Vorsprünge eingeführt sein. In Umfangsrichtung der Dichtungsvorrichtung sind mehrere, wenigstens drei Vorsprünge, in entsprechend wenigstens drei Öffnungen an dem Innendeckbandelement eingeführt. Wenn drei Vorsprünge des Dichtungsträgerringelements in entsprechend drei Öffnungen an dem Innendeckbandelement eingeführt sind, so kann dadurch eine besonders sichere Koppelung zwischen dem Dichtungsträgerringelement (und damit der Dichtungskomponente) und der Leitschaufelkomponente erzielt werden.

In einer vorteilhaften Weiterbildung der Erfindung ist zumindest die Dichtungskomponente gleitsteinfrei ausgebildet. Dies ist von Vorteil, da durch die gleitsteinfreie Ausgestaltung auf die Verwendung von Gleitsteinen verzichtet wird, wodurch eine vereinfachte Montage der Dichtungsvorrichtung ermöglicht ist. Denkbar ist, dass der wenigstens eine Vorsprung an dem Innendeckbandelement und zusätzlich oder alternativ dem Schaufelelement zugewandten Oberflächenbereichen des Vorsprungs wenigstens eine Verschleißschutzschicht aufweist. Diese Verschleißschutzschicht kann anstatt der Gleitsteine vorgesehen sein. Eine vereinfachte Montage der Dichtungsvorrichtung kann zudem erzielt werden, wenn auch die Leitschaufelkomponente gleitsteinfrei ausgebildet ist. Eine besonders einfache Montage der Dichtungsvorrichtung kann erzielt werden, wenn die gesamte Dichtungsvorrichtung gleitsteinfrei ausgebildet ist.

In einer weiteren vorteilhaften Weiterbildung der Erfindung mündet zumindest eine der Öffnungen in wenigstens einen Hohlraum des wenigstens einen Schaufelelements. Dies ist von Vorteil, da durch den Hohlraum des Schaufelelements einerseits Gewicht eingespart werden kann und eine besonders einfache Verbindung zwischen Öffnung und Hohlraum geschaffen werden kann, wenn die Öffnung als einfach herzustellender Durchbruch durch das Innendeckbandelement hergestellt wird.

In einer weiteren vorteilhaften Weiterbildung der Erfindung ist wenigstens einer der Vorsprünge in Radialrichtung der Dichtungsvorrichtung von zumindest einem Hohlraumboden des wenigstens einen Hohlraums beabstandet. Dies ist von Vorteil, da hierdurch eine besonders freie, insbesondere kollisionsfreie, beispielsweise durch Erwärmung des Vorsprungs bedingte Ausdehnung des Vorsprungs in Radialrichtung der Dichtungsvorrichtung ermöglicht ist.

Das Dichtungsträgerringelement umfasst wenigstens drei Vorsprünge und ist über die Vorsprünge radial innerhalb der Leitschaufelkomponenten speichenzentriert. Das Dichtungsträgerringelement umfasst in einer vorteilhaften Weiterbildung der Erfindung wenigstens so viele Vorsprünge, wie Leitschaufelkomponenten in Form von integral ausgebildeten Leitschaufelclustersegmenten vorhanden sind.

Bei einer derartigen Speichenzentrierung, bei der mindestens drei in paarweise verschiedene Radialrichtungen weisende Vorsprünge in eine Leitschaufelkomponente (jeweils dieselbe oder unterschiedliche) eingeführt sind und dabei jeweils in einer zugehörigen Öffnung einer Leitschaufelkomponente radial geführt sind, ist das Dichtungsträgerringelement, das insbesondere als integraler Ring oder Kreisring ausgebildet ist, über die radialen Führungen gehalten und innerhalb einer Ebene senkrecht zur Drehachse der Strömungsmaschine zentriert, so dass insbesondere der Ringmittelpunkt auf oder im Bereich der Drehachse liegt.

Bei der Speichenzentrierung ist jede radiale Führung der Speichenzentrierung radial unfixiert, d.h. im Bereich der Führung nicht gegen eine Verschiebung in die jeweilige Radialrichtung, z.B. nach radial innen, gesichert.

Vorzugsweise bildet jeder der Vorsprünge, wenn er in eine Öffnung der Leitschaufelkomponente eingeführt ist zusammen mit der Öffnung eine radiale Führung in genau eine, bestimmte Radialrichtung, die mit der Radialrichtung an der Stelle des eingeführten Vorsprungs übereinstimmt. Mit anderen Worten erstreckt sich der Vorsprungs quasi eindimensional oder linear in die betreffende Radialrichtung und ist zumindest auf einem radialen Abschnitt vollständig entlang seiner Umfangsfläche in dieser Radialrichtung geführt.

Im Bereich der radialen Führung ist der betreffende Vorsprung gegen eine Verschiebung senkrecht zur betreffenden Radialrichtung gesichert.

Der oder die Vorsprünge können in Radialrichtung zumindest abschnittsweise ein konstanten Querschnitt aufweisen und/oder sich in Richtung nach radial außen zumindest abschnittsweise verjüngen.

In einigen Ausführungen der Erfindung weist Leitschaufelkomponente keine von ihrem Innendeckbandelement nach radial innen vorstehenden Vorsprünge, insbesondere zumindest keine Vorsprünge für eine Radialführung, und/oder nach radial innen vorstehenden Fixierungselemente oder Führungselemente auf. Dadurch können die Leitschaufelkomponenten einen vergleichsweise einfachen Aufbau aufweisen. Die Speichenzentrierung kann damit nur über die Vorsprünge des Dichtungsträgerringelements bereitgestellt werden, ohne dass weitere Vorsprünge oder nach radial innen vorstehende Führungselemente der Leitschaufelkomponente erforderlich wären.

In einigen Ausführungsformen der Erfindung erstrecken sich die ein oder mehreren Vorsprünge des Dichtungsträgerringelements durch das jeweilige Innendeckbandelement hindurch und insbesondere in eine jeweilige Leitschaufel hinein oder sind dazu vorgesehen und ausgebildet.

In einer weiteren vorteilhaften Weiterbildung der Erfindung bilden die zumindest eine Öffnung begrenzende Wandbereiche der Dichtungsvorrichtung und der wenigstens eine Vorsprung mindestens einen Formschluss, durch welchen eine Relativbewegung zwischen der wenigstens einen Leitschaufelkomponente und der zumindest einen Dichtungskomponente in Umfangsrichtung und/oder in Axialrichtung der Dichtungsvorrichtung unterbunden ist. Dies ist von Vorteil, da hierdurch auf besonders einfache Weise eine sichere Koppelung zwischen der Leitschaufelkomponente und der Dichtungskomponente ermöglicht ist. Die Relativbewegung zwischen der Leitschaufelkomponente und der Dichtungskomponente kann besonders weitgehend eingeschränkt werden, wenn die Leitschaufelkomponente und die Dichtungskomponente den Formschluss sowohl in Umfangsrichtung als auch in Axialrichtung bilden. Die Leitschaufelkomponente und die Dichtungskomponente können insbesondere bolzenfrei, stiftfrei und zusätzlich oder alternativ schraubenfrei miteinander verbunden sein. Mit anderen Worten können die Leitschaufelkomponente und die Dichtungskomponente ohne Bolzen, Stifte und zusätzlich oder Alternativschrauben miteinander verbunden sein. Insbesondere können die Leitschaufelkomponente und die Dichtungskomponente ausschließlich formschlüssig miteinander gekoppelt und dadurch miteinander verbunden sein. Die Wandbereiche können durch das Innendeckbandelement gebildet sein. Mit anderen Worten können die Wandbereiche dem Innendeckbandelement zugeordnet sein. Das Innendeckbandelement kann die Wandbereiche also umfassen.

In einer weiteren vorteilhaften Weiterbildung der Erfindung umfasst das wenigstens eine Dichtungsträgerringelement zumindest ein Dichtflanschelement, welches mit dem zumindest einen Ringkörperelement verbunden und in Axialrichtung der Dichtungsvorrichtung von dem wenigstens einen Vorsprung beabstandet ist. Dies ist von Vorteil, da hierdurch eine besonders hohe Dichtheit gegenüber Leckageströmungen erzielt werden kann. Das Dichtflanschelement und das Ringkörperelement können insbesondere einteilig miteinander verbunden sein. Dadurch kann eine besonders aufwandsarme Montage der Dichtungsvorrichtung erzielt werden.

Gemäß einer Ausführungsform ist Dichtungsträgerringelement als integraler, geschlossener Ring ausgebildet oder umfasst einen solchen. Demnach kann das Dichtungsträgerringelement ein unsegmentierter Vollring sein, der einstückig,, monolithisch ausgebildet ist, oder kann einen solchen umfassen.

In einer weiteren vorteilhaften Weiterbildung der Erfindung umfasst die wenigstens eine Leitschaufelkomponente zumindest ein Flanschelement, welches in Radialrichtung der Dichtungsvorrichtung von dem zumindest einen Innendeckbandelement abragt und in einen Zwischenraum, welcher sich in Axialrichtung der Dichtungsvorrichtung zwischen dem zumindest einen Dichtflanschelement und dem wenigstens einen Vorsprung erstreckt, eingeführt ist. Dies ist von Vorteil, da sich hierdurch eine besonders hohe Dichtwirkung gegenüber Leckageströmungen erzielen lässt. Durch diese Anordnung kann das Flanschelement also in den Zwischenraum zwischen dem Dichtflanschelement und dem Vorsprung eingreifen, wodurch sich - ähnlich einer Labyrinthdichtung - eine verbesserte Abdichtung erzielen lässt. Das Innendeckbandelement kann insbesondere in Richtung des Ringkörperelements abragen.

In einer weiteren vorteilhaften Weiterbildung der Erfindung umfasst die wenigstens eine Leitschaufelkomponente zumindest ein Zusatz-Flanschelement, welches in Radialrichtung der Dichtungsvorrichtung von dem zumindest einen Innendeckbandelement abragt und in Axialrichtung der Dichtungsvorrichtung unter Ausbildung wenigstens eines Spaltraums von dem zumindest einen Flanschelement beabstandet ist. Dies ist von Vorteil, da sich hierdurch die Dichtwirkung gegenüber Leckageströmungen noch weiter verbessern lässt. Das Zusatz-Flanschelement kann insbesondere in Richtung des zumindest einen Ringkörperelement in Radialrichtung abragen. Der Spaltraum kann insbesondere als Ringsspalt ausgebildet sein. Unter dem Ausdruck "Spaltraum" kann also ein spaltförmiger, insbesondere ringspaltförmiger, Spalt verstanden werden. Die zumindest eine Öffnung kann sich auch zwischen dem Flanschelement und dem Zusatz-Flanschelement erstrecken.

In einer vorteilhaften Weiterbildung der Erfindung ist der wenigstens eine Vorsprung in den wenigstens einen Spaltraum eingeführt. Hierdurch ergibt sich in vorteilhafter Weise eine Hinteraneinanderreihung von Dichtflanschelement, Flanschelements, Vorsprung und Zusatz-Flanschelement, wodurch einerseits eine besonders gute Dichtwirkung gegenüber Leckageströmungen und andererseits eine besonders haltbare, insbesondere formschlüssige, Verbindung zwischen der Leitschaufelkomponente und der Dichtungskomponente geschaffen werden kann.

Ein zweiter Aspekt der Erfindung betrifft ein Dichtungsträgerringelement für eine Dichtungsvorrichtung gemäß dem ersten Aspekt der Erfindung. Das Dichtungsträgerringelement umfasst zumindest ein Ringkörperelement und wenigstens drei Vorsprünge, welche einteilig mit dem zumindest einen Ringkörperelement verbunden sind und in Radialrichtung der Dichtungsvorrichtung von dem zumindest einen Ringkörperelement abragen, wobei die wenigstens drei Vorsprünge zum Einführen in zumindest eine Öffnung der wenigstens einen Leitschaufelkomponente der Dichtungsvorrichtung und dadurch zur Aufnahme der Leitschaufelkomponente ausgebildet sind.

Ein dritter Aspekt der Erfindung betrifft eine Strömungsmaschine, umfassend wenigstens eine Dichtungsvorrichtung gemäß dem ersten Aspekt der Erfindung und/oder wenigstens ein Dichtungsträgerringelement gemäß dem zweiten Aspekt der Erfindung. Diese Strömungsmaschine weist ein besonders geringes Gewicht auf und kann aufwandsarm hergestellt werden.

In einer vorteilhaften Weiterbildung der Erfindung ist die Strömungsmaschine als Flugtriebwerk ausgebildet. Dies ist von Vorteil, da sich die Strömungsmaschine aufgrund deren geringen Gewichtes in besonderem Maße für deren Einsatz als Flugtriebwerk eignet.

Die im Zusammenhang mit der Dichtungsvorrichtung gemäß dem ersten Aspekt der Erfindung und dem Dichtungsträgerringelement gemäß dem zweiten Aspekt der Erfindung vorgestellten Merkmale sowie deren Vorteile gelten entsprechend für die erfindungsgemäße Strömungsmaschine gemäß dem dritten Aspekt der Erfindung und umgekehrt.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: einen Teilbereich einer Dichtungsvorrichtung in schematischer Schnittdarstellung bei Ansichtsrichtung entlang einer Umfangsrichtung der Dichtungsvorrichtung, wobei die Dichtungsvorrichtung eine Leitschaufelkomponente sowie eine Dichtungskomponente umfasst und in einer stark abstrahiert dargestellten Strömungsmaschine angeordnet ist;
- Fig. 2: eine weitere Schnittdarstellung eines vergrößert dargestellten Segments der Dichtungsvorrichtung bei Ansichtsrichtung entlang einer Axialrichtung der Dichtungsvorrichtung;
- Fig. 3: eine schematische Draufsicht auf ein Dichtungsträgerringelement der Dichtungskomponente bei Ansichtsrichtung entlang der Axialrichtung der Dichtungsvorrichtung, wobei das Dichtungsträgerringelement ein Ringkörperelement und eine Mehrzahl an in Radialrichtung der Dichtungsvorrichtung von dem Ringkörperelement abragenden Vorsprüngen umfasst;
- Fig. 4: eine schematische Draufsicht auf die Dichtungsvorrichtung bei Ansichtsrichtung entlang der Axialrichtung;
- Fig. 5: eine weitere schematische Schnittdarstellung des Teilbereichs der Dichtungsvorrichtung bei Ansichtsrichtung entlang der Umfangsrichtung, wobei ein Einlaufbelag der Dichtungskomponente erkennbar ist;
- Fig. 6: eine schematische Explosionsdarstellung des Teilbereichs der Dichtungsvorrichtung, wobei die Leitschaufelkomponente und die Dichtungskomponente voneinander getrennt sind; und
- Fig. 7: eine schematische Schnittdarstellung eines Teilbereichs einer Variante der Dichtungsvorrichtung.

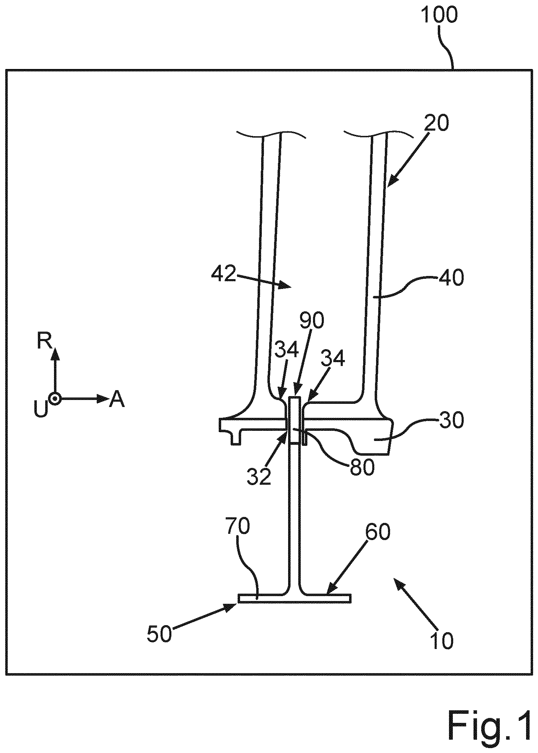

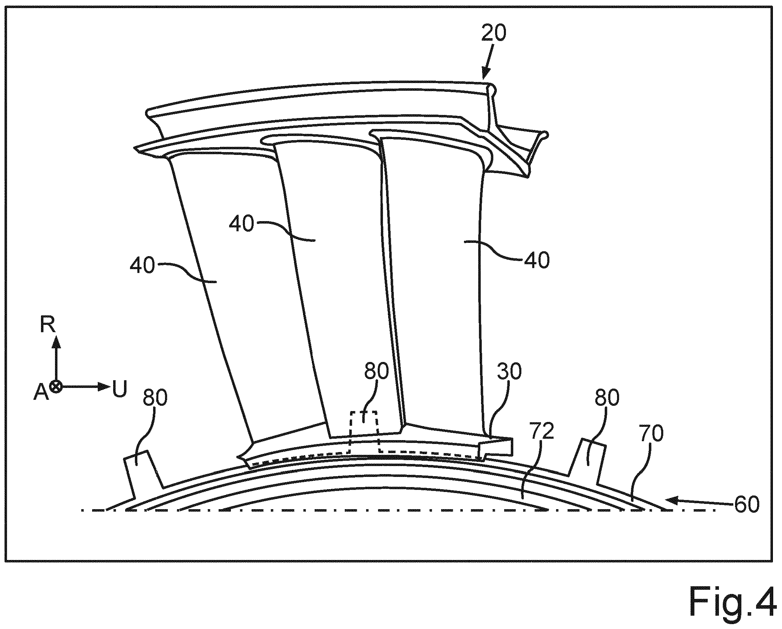

**FIG. 1** zeigt eine stark abstrahiert dargestellte und als Flugtriebwerk ausgebildete Strömungsmaschine 100, welche zumindest eine Dichtungsvorrichtung 10 umfasst. Die Dichtungsvorrichtung 10 umfasst eine Mehrzahl an Leitschaufelkomponenten 20, von welchen nachfolgend jeweils nur eine Leitschaufelkomponente 20 gezeigt ist. Die jeweiligen Leitschaufelkomponenten 20 können gemeinsam einen Leitschaufelkranz der Strömungsmaschine 100 bilden, was vorliegend jedoch nicht gezeigt ist. Die einzelne Leitschaufelkomponente 20 kann vorliegend ein Segment des Leitschaufelkranzes bilden, wie beispielhaft anhand von **Fig. 4** erkennbar ist, und auch als Leitschaufelkranzsegment bezeichnet werden.

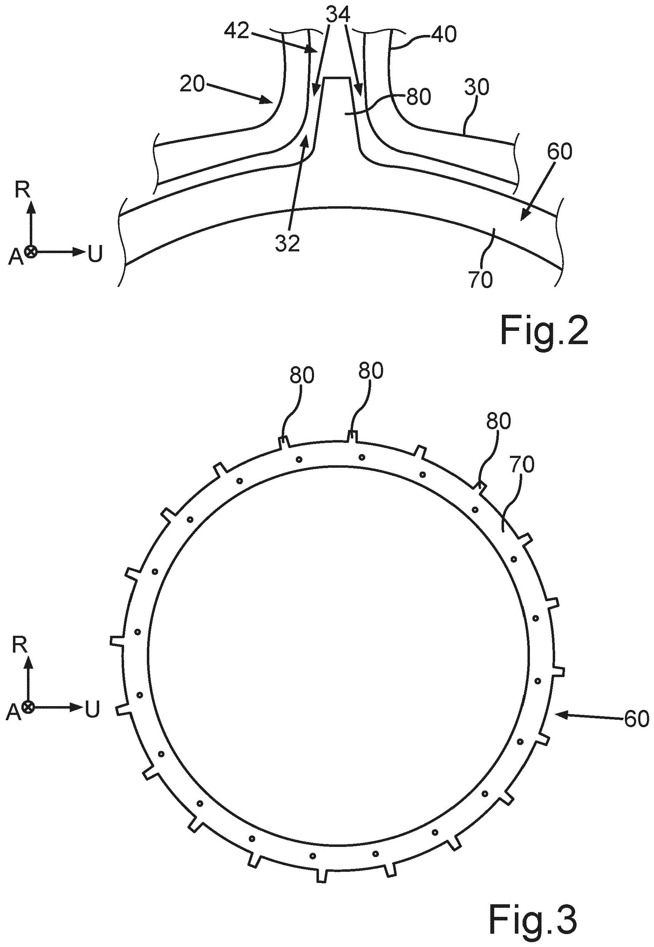

Die Leitschaufelkomponente 20 umfasst zumindest ein Innendeckbandelement 30, welches vergrößert in **Fig. 2** erkennbar ist, und wenigstens ein mit dem zumindest einen Innendeckbandelement 30 verbundenes Schaufelelement 40 in Form eines Leitschaufelblatts. Die Leitschaufelkomponente 20 umfasst zudem zumindest eine gleitsteinfrei ausgebildete Dichtungskomponente 50, welche zumindest ein mit der wenigstens einen Leitschaufelkomponente 20 gekoppeltes Dichtungsträgerringelement 60 aufweist. Das Dichtungsträgerringelement 60 kann insbesondere als unsegmentierter Innenring ausgebildet sein.

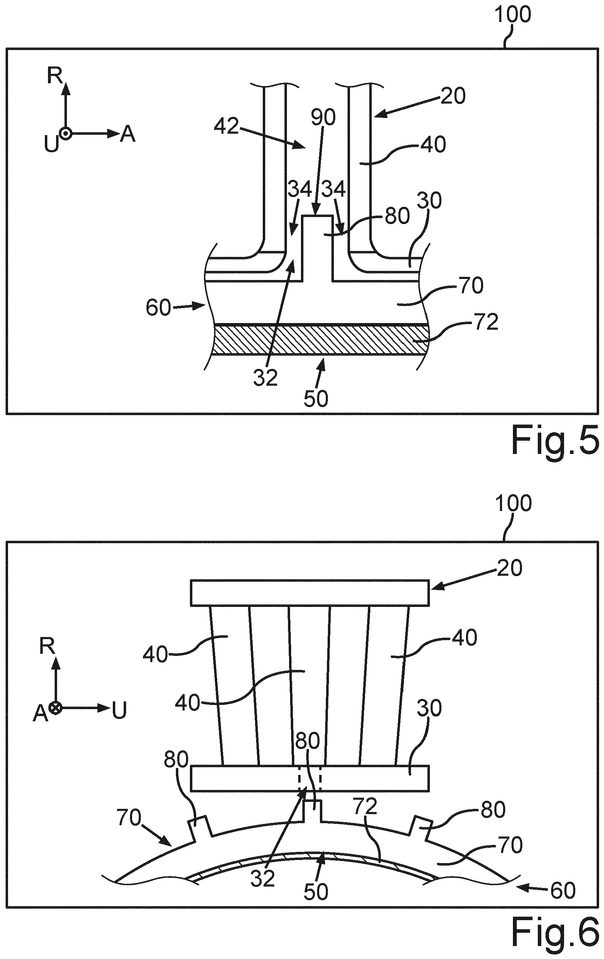

Das wenigstens eine Dichtungsträgerringelement 60 umfasst zumindest ein Ringkörperelement 70 und Vorsprünge 80, welche einteilig mit dem zumindest einen Ringkörperelement 70 verbunden sind, in Radialrichtung R der Dichtungsvorrichtung 10 von dem zumindest einen Ringkörperelement 70 abragen und in jeweils eine Öffnung 32 der Leitschaufelkomponente 20, welche sich insbesondere durch das zumindest eine Innendeckbandelement 30 erstrecken kann, eingeführt sind. Jeweils einer der Vorsprünge 80, welche auch als Nasen bezeichnet werden können, ist somit in jeweils eine der Öffnungen 32 eingeführt. Sowohl die Vorsprünge 80 als auch die Öffnungen 32 sind vorliegend gleichmäßig in Umfangsrichtung U der Dichtungsvorrichtung 10 angeordnet. Die Vorsprünge 80, sowie deren regelmäßige Anordnung in Umfangsrichtung U der Dichtungsvorrichtung 10, sind sowohl in **Fig. 3** als auch in Fig. 4 besonders deutlich zu erkennen. Vorzugsweise können beispielsweise die Vorsprünge 80 mit zumindest einer Verschleißschutzschicht versehen sein. Die Verschleißschutzschicht kann zur unmittelbaren und verschleißarmen Abstützung des Dichtungsträgerringelements 60 und damit der Dichtungskomponente 50 an der Leitschaufelkomponente 20 dienen. **Fig. 5** und **Fig. 6** zeigen jeweils, dass die Dichtungskomponente 50 zumindest einen Einlaufbelag 72 umfasst, welcher in Radialrichtung R innen an dem Ringkörperelement 70 angeordnet ist. Der Einlaufbelag kann ein sogenanntes "Anstreifen" durch einen Rotor, insbesondere ein Einlaufen einer nabenseitigen Dichtfinne des Rotors, ermöglichen und vorzugsweise eine Honigwabenstruktur aufweisen. Die Radialrichtung R bezieht sich dabei allgemein nicht nur auf die Dichtungsvorrichtung 10, sondern auch auf das Dichtungsträgerringelement 60 und die Strömungsmaschine 100.

Die Öffnungen 32 münden in jeweilige Hohlräume 42 des wenigstens einen Schaufelelements 40. Jeweils eine der Öffnungen 32 mündet dabei in jeweils einen der Hohlräume 42. Die Öffnungen 32 und die Hohlräume 42 können durch jeweilige Kernauszüge gebildet oder - vorzugsweise durch spanende Bearbeitung - in die Leitschaufelkomponente 20 eingearbeitet werden.

Die Vorsprünge 80 sind in Radialrichtung R der Dichtungsvorrichtung 10 von jeweiligen Hohlraumböden der Hohlräume 42 beabstandet. Die Hohlraumböden stellen in Radialrichtung R außen liegende Begrenzungen der jeweiligen Hohlräume dar und sind vorliegend nicht weiter gezeigt.

Jeweils eine der Öffnungen 32 begrenzende Wandbereiche 34 der Dichtungsvorrichtung 10 und jeweils einer der Vorsprünge 80 bilden jeweils einen Formschluss 90, durch welchen eine Relativbewegung zwischen der wenigstens einen Leitschaufelkomponente 20 und der zumindest einen Dichtungskomponente 50 in Umfangsrichtung U und in Axialrichtung A der Dichtungsvorrichtung 10 zumindest eingeschränkt ist. Vorzugsweise können die Wandbereiche 34 mit zumindest einer Zusatz-Verschleißschutzschicht versehen sein. Die Zusatz-Verschleißschutzschicht kann zur unmittelbaren und verschleißarmen Abstützung der Vorsprünge 80 des Dichtungsträgerringelements 60 und damit der Dichtungskomponente 50 an der Leitschaufelkomponente 20 dienen. Die Zusatz-Verschleißschutzschicht kann zusätzlich oder alternativ zu der Verschleißschutzschicht (an den Vorsprüngen 80) vorgesehen sein. Die Verschleißschutzschicht und die Zusatz-Verschleißschutzschicht können aus dem gleichen Material gebildet sein.

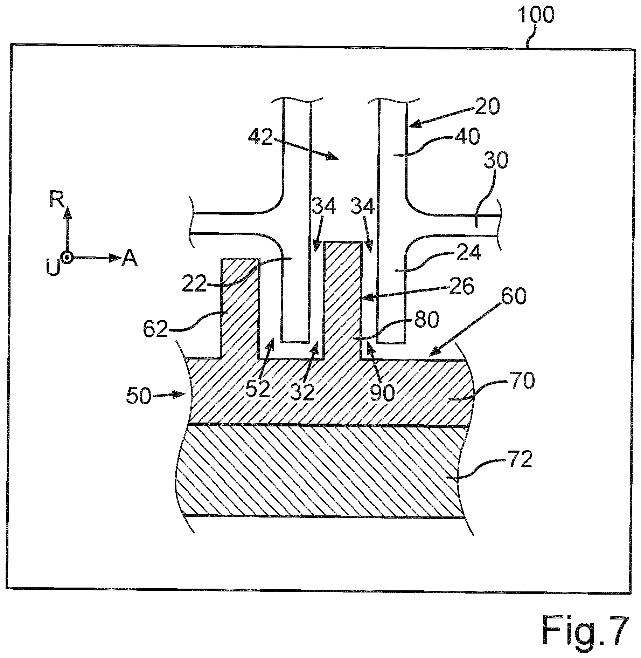

Das wenigstens eine Dichtungsträgerringelement 60 kann zudem zumindest ein Dichtflanschelement 62 umfassen, wie in **Fig. 7** zu erkennen ist. Das zumindest eine Dichtflanschelement 62 ist mit dem zumindest einen Ringkörperelement 70 verbunden und in Axialrichtung A der Dichtungsvorrichtung 10 von den in Umfangsrichtung U der Dichtungsvorrichtung 10 aneinandergereihten Vorsprüngen 80 beabstandet. Die wenigstens eine Leitschaufelkomponente 20 kann zudem zumindest ein Flanschelement 22 umfassen, welches in Radialrichtung R der Dichtungsvorrichtung 10 von dem zumindest einen Innendeckbandelement 30 abragt und in einen Zwischenraum 52, welcher sich in Axialrichtung A der Dichtungsvorrichtung 10 zwischen dem zumindest einen Dichtflanschelement 62 und dem wenigstens einen Vorsprung 80 erstreckt, eingeführt ist.

Die wenigstens eine, in Fig. 7 gezeigte Leitschaufelkomponente 20 kann des Weiteren zumindest ein Zusatz-Flanschelement 24 umfassen, welches in Radialrichtung R der Dichtungsvorrichtung 10 von dem zumindest einen Innendeckbandelement 30 abragt und in Axialrichtung A der Dichtungsvorrichtung 10 unter Ausbildung wenigstens eines Spaltraums 26 von dem zumindest einen Flanschelement 22 beabstandet ist. Die Vorsprünge 80 sind dabei in den wenigstens einen Spaltraum 26 eingeführt. Der Spaltraum 26 ist als spaltförmiger, insbesondere ringspaltförmiger, Raum ausgebildet.

Die vorliegende Dichtungsvorrichtung 10 ermöglichet es, auf aus dem Stand der Technik bekannte "inner air seals" zu verzichten, bei welchen ein vorderer Flansch und hinterer Flansch aufwändig hergestellt (beispielsweise durch Drehen und Schleifen) und üblicherweise durch einen Niet oder Lockbolt mit einem Gleitstein befestigt sind.

Bei der Dichtungsvorrichtung 10 bilden die Vorsprünge 80 einen einzelnen Steg am Ringkörperelement 70, wobei die Sicherung zwischen Leitschaufelkomponente 20 und Dichtungskomponente 50 durch die Vorsprünge 80 erfolgt, welche in die jeweiligen Öffnungen 32 eingeführt sind. Bei der Dichtungsvorrichtung 10 kann auf die Verwendung von Gleitsteinen, welche auch als "Keys" bezeichnet werden können, verzichtet werden. Zudem weist die Dichtungsvorrichtung 10 ein geringeres Gewicht auf und ist mit geringerem Bearbeitungsaufwand herzustellen, als aus dem Stand der Technik bekannte inner air seals. So weist die Dichtungsvorrichtung beispielsweise ein einfacheres Design und weniger Teile auf, wobei beispielsweise auf Niete oder Lockbolts verzichtet werden kann.

### Bezugszeichenliste:

- 10: Dichtungsvorrichtung
- 20: Leitschaufelkomponente
- 22: Flanschelement
- 24: Zusatz-Flanschelement
- 26: Spaltraum
- 30: Innendeckbandelement
- 32: Öffnung
- 34: Wandbereich
- 40: Schaufelelement
- 42: Hohlraum
- 50: Dichtungskomponente
- 52: Zwischenraum
- 60: Dichtungsträgerringelement
- 62: Dichtflanschelement
- 70: Ringkörperelement
- 72: Einlaufbelag
- 80: Vorsprung
- 90: Formschluss
- 100: Strömungsmaschine
- A: Axialrichtung
- R: Radialrichtung
- U: Umfangsrichtung

## Patentansprüche

1. Dichtungsvorrichtung (10) für eine Strömungsmaschine (100), mit wenigstens einer Leitschaufelkomponente (20), welche zumindest ein Innendeckbandelement (30) und wenigstens ein mit dem zumindest einen Innendeckbandelement (30) verbundenes Schaufelelement (40) umfasst, und mit zumindest einer Dichtungskomponente (50), welche zumindest ein mit der wenigstens einen Leitschaufelkomponente (20) gekoppeltes Dichtungsträgerringelement (60) aufweist, wobei
das wenigstens eine Dichtungsträgerringelement (60) zumindest ein Ringkörperelement (70) und wenigstens einen Vorsprung (80) umfasst, welcher einteilig mit dem zumindest einen Ringkörperelement (70) verbunden ist, in Radialrichtung (R) der Dichtungsvorrichtung (10) von dem zumindest einen Ringkörperelement (70) abragt und in zumindest eine Öffnung (32) der wenigstens einen Leitschaufelkomponente (20) eingeführt ist, **dadurch gekennzeichnet, dass** das Dichtungsträgerringelement (60) wenigstens drei Vorsprünge (80) umfasst, die jeweils in einer zugehörigen Öffnung einer der wenigstens einen Leitschaufelkomponente (20) radial geführt sind,
und das Dichtungsträgerringelement (60) über die Vorsprünge (80) radial innerhalb der wenigstens einen Leitschaufelkomponente (20) speichenzentriert ist, bei welcher Speichenzentrierung das Dichtungsträgerringelement über die radialen Führungen, welche radial unfixiert sind, gehalten ist und das Dichtungsträgerringelement innerhalb einer Ebene senkrecht zur Drehachse der Strömungsmaschine zentriert ist, wobei die Vorsprünge (80) gegen eine Verschiebung senkrecht zur betreffenden Radialrichtung gesichert sind.

2. Dichtungsvorrichtung (10) nach Anspruch 1,
**dadurch gekennzeichnet, dass**
zumindest die Dichtungskomponente (50) gleitsteinfrei ausgebildet ist.

3. Dichtungsvorrichtung (10) nach Anspruch 2,
**dadurch gekennzeichnet, dass**
die zumindest eine Öffnung (32) in wenigstens einen Hohlraum (42) des wenigstens einen Schaufelelements (40) mündet.

4. Dichtungsvorrichtung (10) nach Anspruch 3,
**dadurch gekennzeichnet, dass**
der wenigstens eine Vorsprung (80) in Radialrichtung (R) der Dichtungsvorrichtung (10) von zumindest einem Hohlraumboden des wenigstens einen Hohlraums (42) beabstandet ist.

5. Dichtungsvorrichtung (10) nach einem der vorhergehenden Ansprüche,
**dadurch gekennzeichnet, dass**
das Dichtungsträgerringelement (60) wenigstens so viele Vorsprünge (80), wie Leitschaufelkomponenten (20) in Form von integral ausgebildeten Leitschaufelclustersegmenten vorhanden sind, umfasst und das Dichtungsträgerringelement (60) über die Vorsprünge (80) radial innerhalb der Leitschaufelkomponenten (20) speichenzentriert ist.

6. Dichtungsvorrichtung (10) nach einem der vorhergehenden Ansprüche,
**dadurch gekennzeichnet, dass**
die zumindest eine Öffnung (32) begrenzende Wandbereiche (34) der Dichtungsvorrichtung (10) und der wenigstens eine Vorsprung (80) mindestens einen Formschluss (90) bilden, durch welchen eine Relativbewegung zwischen der wenigstens einen Leitschaufelkomponente (20) und der zumindest einen Dichtungskomponente (50) in Umfangsrichtung (U) und/oder in Axialrichtung (A) der Dichtungsvorrichtung (10) unterbunden ist.

7. Dichtungsvorrichtung (10) nach einem der vorhergehenden Ansprüche,
**dadurch gekennzeichnet, dass**
das wenigstens eine Dichtungsträgerringelement (60) zumindest ein Dichtflanschelement (62) umfasst, welches mit dem zumindest einen Ringkörperelement (70) verbunden und in Axialrichtung (A) der Dichtungsvorrichtung (10) von dem wenigstens einen Vorsprung (80) beabstandet ist und/oder dass das Dichtungsträgerringelement (60) als integraler Vollring ausgebildet ist oder einen umfasst.

8. Dichtungsvorrichtung (10) nach Anspruch 7,
**dadurch gekennzeichnet, dass**
die wenigstens eine Leitschaufelkomponente (20) zumindest ein Flanschelement (22) umfasst, welches in Radialrichtung (R) der Dichtungsvorrichtung (10) von dem zumindest einen Innendeckbandelement (30) abragt und in einen Zwischenraum (52), welcher sich in Axialrichtung (A) der Dichtungsvorrichtung (10) zwischen dem zumindest einen Dichtflanschelement (62) und dem wenigstens einen Vorsprung (80) erstreckt, eingeführt ist.

9. Dichtungsvorrichtung (10) nach Anspruch 8,
**dadurch gekennzeichnet, dass**
die wenigstens eine Leitschaufelkomponente (20) zumindest ein Zusatz-Flanschelement (24) umfasst, welches in Radialrichtung (R) der Dichtungsvorrichtung (10) von dem zumindest einen Innendeckbandelement (30) abragt und in Axialrichtung (A) der Dichtungsvorrichtung (10) unter Ausbildung wenigstens eines Spaltraums (26) von dem zumindest einen Flanschelement (22) beabstandet ist.

10. Dichtungsvorrichtung (10) nach Anspruch 9,
**dadurch gekennzeichnet, dass**
der wenigstens eine Vorsprung (80) in den wenigstens einen Spaltraum (26) eingeführt ist.

11. Dichtungsträgerringelement (60) für eine Dichtungsvorrichtung (10) nach einem der Ansprüche 1 bis 10, wobei das Dichtungsträgerringelement (60) zumindest ein Ringkörperelement (70) und wenigstens drei Vorsprünge (80) umfasst, welche einteilig mit dem zumindest einen Ringkörperelement (70) verbunden sind und in Radialrichtung (R) der Dichtungsvorrichtung (10) von dem zumindest einen Ringkörperelement (70) abragen, **dadurch gekennzeichnet, dass** die wenigstens drei Vorsprünge (80) jeweils zum Einführen in eine zugehörige Öffnung (32) einer Leitschaufelkomponente (20) der Dichtungsvorrichtung (10) und dadurch zur Aufnahme der betreffenden Leitschaufelkomponente (20) sowie zur Ausbildung einer Speichenzentrierung ausgebildet sind, bei welcher Speichenzentrierung die wenigstens drei Vorsprünge (80) jeweils in der zugehörigen Öffnung radial geführt sind und das Dichtungsträgerringelement über die radialen Führungen, welche radial unfixiert sind, gehalten ist und das Dichtungsträgerringelement innerhalb einer Ebene senkrecht zur Drehachse der Strömungsmaschine zentriert ist, wobei die Vorsprünge (80) gegen eine Verschiebung senkrecht zur betreffenden Radialrichtung gesichert sind.

12. Dichtungsträgerringelement (60) nach Anspruch 11, wobei das Dichtungsträgerringelement (60) als integraler geschlossener Ring ausgebildet ist oder einen solchen umfasst und/oder wenigstens drei Vorsprünge (80) oder wenigstens so viele Vorsprünge (80), wie Leitschaufelkomponenten in Form von integral ausgebildeten Leitschaufelclustersegmente vorhanden sind, umfasst.

13. Strömungsmaschine (100), umfassend wenigstens eine Dichtungsvorrichtung (10) nach einem der Ansprüche 1 bis 10 und/oder wenigstens ein Dichtungsträgerringelement (60) nach Anspruch 11 oder 12.

14. Strömungsmaschine (100) nach Anspruch 13
**dadurch gekennzeichnet, dass**
die Strömungsmaschine (100) als Flugtriebwerk ausgebildet ist.

## Claims

1. A sealing device (10) for a turbomachine (100), comprising at least one guide vane component (20) which comprises at least one inner shroud element (30) and at least one vane element (40) connected to the at least one inner shroud element (30), and at least one seal component (50) which has at least one seal-carrier ring element (60) coupled to the at least one guide vane component (20), wherein
the at least one seal-carrier ring element (60) comprises at least one ring body element (70) and at least one projection (80) which is connected integrally to the at least one ring body element (70), protrudes from the at least one ring body element (70) in the radial direction (R) of the sealing device (10) and is inserted into at least one opening (32) of the at least one guide vane component (20), **characterized in that** the seal-carrier ring element (60) comprises at least three projections (80), each of which is guided radially in an associated opening of one of the at least one guide vane component (20), and the seal-carrier ring element (60) is spoke-centered by the projections (80) radially within the at least one guide vane component (20), in which spoke centering the seal-carrier ring element is held via the radial guides, which are radially unfixed, and the seal-carrier ring element is centered within a plane perpendicular to the axis of rotation of the turbomachine, wherein the projections (80) are secured against displacement perpendicular to the corresponding radial direction.

2. The sealing device (10) according to claim 1,
**characterized in that**
at least the seal component (50) is formed without sliding blocks.

3. The sealing device (10) according to claim 2,
**characterized in that**
the at least one opening (32) leads into at least one cavity (42) of the at least one vane element (40).

4. The sealing device (10) according to claim 3,
**characterized in that**
the at least one projection (80) is spaced apart in the radial direction (R) of the sealing device (10) from at least one cavity bottom of the at least one cavity (42).

5. The sealing device (10) according to any of the preceding claims,
**characterized in that**
the seal-carrier ring element (60) comprises at least as many projections (80) as there are guide vane components (20) in the form of integrally formed guide vane cluster segments, and the seal-carrier ring element (60) is spoke-centered by the projections (80) radially within the guide vane components (20).

6. The sealing device (10) according to any of the preceding claims,
**characterized in that**
the wall regions (34) of the sealing device (10) bounding the at least one opening (32), and the at least one projection (80), form at least one interlocking fit (90) preventing a relative movement between the at least one guide vane component (20) and the at least one seal component (50) in the circumferential direction (U) and/or in the axial direction (A) of the sealing device (10).

7. The sealing device (10) according to any of the preceding claims,
**characterized in that**
the at least one seal-carrier ring element (60) comprises at least one sealing flange element (62) which is connected to the at least one ring body element (70) and, in the axial direction (A) of the sealing device (10), is spaced apart from the at least one projection (80), and/or **in that** the seal-carrier ring element (60) is formed as an integral, full ring or comprises one.

8. The sealing device (10) according to claim 7,
**characterized in that**
the at least one guide vane component (20) comprises at least one flange element (22) which protrudes from the at least one inner shroud element (30) in the radial direction (R) of the sealing device (10) and is inserted into an intermediate space (52) extending in the axial direction (A) of the sealing device (10) between the at least one sealing flange element (62) and the at least one projection (80).

9. The sealing device (10) according to claim 8
**characterized in that**
the at least one guide vane component (20) comprises at least one additional flange element (24) which protrudes from the at least one inner shroud element (30) in the radial direction (R) of the sealing device (10) and is spaced apart from the at least one flange element (22) in the axial direction (A) of the sealing device (10) while forming at least one gap space (26).

10. The sealing device (10) according to claim 9,
**characterized in that**
the at least one projection (80) is inserted into the at least one gap space (26).

11. A seal-carrier ring element (60) for a sealing device (10) according to any of claims 1 to 10, wherein the seal-carrier ring element (60) comprises at least one ring body element (70) and at least three projections (80) which are integrally connected to the at least one ring body element (70) and protrude from the at least one ring body element (70) in the radial direction (R) of the sealing device (10),
**characterized in that**
the at least three projections (80) are each formed for insertion into an associated opening (32) of a guide vane component (20) of the sealing device (10) and thereby for receiving the corresponding guide vane component (20) and for forming a spoke centering, in which spoke centering the at least three projections (80) are each guided radially in the associated opening and the seal-carrier ring element is held via the radial guides, which are radially unfixed, and the seal-carrier ring element is centered within a plane perpendicular to the axis of rotation of the turbomachine, wherein the projections (80) are secured against displacement perpendicular to the corresponding radial direction.

12. The seal-carrier ring element (60) according to claim 11, wherein the seal-carrier ring element (60) is formed as an integral closed ring or comprises such a ring and/or comprises at least three projections (80) or at least as many projections (80) as there are guide vane components in the form of integrally formed guide vane cluster segments.

13. A turbomachine (100) comprising at least one sealing device (10) according to any of claims 1 to 10 and/or at least one seal-carrier ring element (60) according to claim 11 or 12.

14. The turbomachine (100) according to claim 13,
**characterized in that**
the turbomachine (100) is formed as an aircraft engine.

## Revendications

1. Dispositif d'étanchéité (10) pour une turbomachine (100), comportant au moins un composant d'aube directrice (20), qui comprend au moins un élément bande de revêtement intérieur (30) et au moins un élément aube (40) relié à l'au moins un élément bande de revêtement intérieur (30), et comportant au moins un composant d'étanchéité (50), qui présente au moins un élément annulaire de support d'étanchéité (60) accouplé à l'au moins un composant d'aube directrice (20), dans lequel
l'au moins un élément annulaire de support d'étanchéité (60) comprend au moins un élément corps annulaire (70) et au moins une saillie (80), qui est reliée d'un seul tenant à l'au moins un élément corps annulaire (70), dépasse de l'au moins un élément corps annulaire (70) dans la direction radiale (R) du dispositif d'étanchéité (10) et est insérée dans au moins une ouverture (32) de l'au moins un composant d'aube directrice (20), **caractérisé en ce que** l'élément annulaire de support d'étanchéité (60) comprend au moins trois saillies (80), qui sont respectivement guidées radialement dans une ouverture correspondante d'un des au moins un composant d'aube directrice (20), et l'élément annulaire de support d'étanchéité (60) est centré par rayons radialement à l'intérieur de l'au moins un composant d'aube directrice (20) par l'intermédiaire des saillies (80), dans lequel centrage par rayons l'élément annulaire de support d'étanchéité est maintenu par les guides radiaux, qui ne sont pas fixés radialement, et l'élément annulaire de support d'étanchéité est centré à l'intérieur d'un plan perpendiculaire à l'axe de rotation de la turbomachine, dans lequel les saillies (80) sont bloquées contre un déplacement perpendiculaire à la direction radiale concernée.

2. Dispositif d'étanchéité (10) selon la revendication 1,
**caractérisé en ce que**
au moins le composant d'étanchéité (50) est réalisé sans coulisseau.

3. Dispositif d'étanchéité (10) selon la revendication 2,
**caractérisé en ce que**
l'au moins une ouverture (32) débouche dans au moins une cavité (42) de l'au moins un élément aube (40).

4. Dispositif d'étanchéité (10) selon la revendication 3,
**caractérisé en ce que**
l'au moins une saillie (80) est espacée dans la direction radiale (R) du dispositif d'étanchéité (10) d'au moins un fond de cavité de l'au moins une cavité (42).

5. Dispositif d'étanchéité (10) selon l'une des revendications précédentes,
**caractérisé en ce que**
l'élément annulaire de support d'étanchéité (60) comprend au moins autant de saillies (80) qu'il y a de composants d'aube directrice (20) sous la forme de segments de grappe d'aubes directrices réalisés d'un seul tenant, et l'élément annulaire de support d'étanchéité (60) est centré par rayons radialement à l'intérieur des composants d'aube directrice (20) par l'intermédiaire des saillies (80).

6. Dispositif d'étanchéité (10) selon l'une des revendications précédentes,
**caractérisé en ce que**
des zones de paroi (34) du dispositif d'étanchéité (10) délimitant l'au moins une ouverture (32) et l'au moins une saillie (80) forment au moins une liaison par complémentarité de forme (90), par laquelle un déplacement relatif entre l'au moins un composant d'aube directrice (20) et l'au moins un composant d'étanchéité (50) est empêché dans la direction périphérique (U) et/ou dans la direction axiale (A) du dispositif d'étanchéité (10).

7. Dispositif d'étanchéité (10) selon l'une des revendications précédentes,
**caractérisé en ce que**
l'au moins un élément annulaire de support d'étanchéité (60) comprend au moins un élément bride d'étanchéité (62) qui est relié à l'au moins un élément corps annulaire (70) et est espacé de l'au moins une saillie (80) dans la direction axiale (A) du dispositif d'étanchéité (10) **et/ou en ce que** l'élément annulaire de support d'étanchéité (60) est réalisé comme un anneau plein d'un seul tenant ou en comprend un.

8. Dispositif d'étanchéité (10) selon la revendication 7,
**caractérisé en ce que**
l'au moins un composant d'aube directrice (20) comprend au moins un élément bride (22) qui fait saillie dans la direction radiale (R) du dispositif d'étanchéité (10) à partir de l'au moins un élément bande de revêtement intérieur (30) et est inséré dans un espace intermédiaire (52) qui s'étend dans la direction axiale (A) du dispositif d'étanchéité (10) entre l'au moins un élément bride d'étanchéité (62) et l'au moins une saillie (80).

9. Dispositif d'étanchéité (10) selon la revendication 8,
**caractérisé en ce que**
l'au moins un composant d'aube directrice (20) comprend au moins un élément bride supplémentaire (24) qui fait saillie à partir de l'au moins un élément bande de revêtement intérieur (30) dans la direction radiale (R) du dispositif d'étanchéité (10) et qui est espacé de l'au moins un élément bride (22) dans la direction axiale (A) du dispositif d'étanchéité (10) en formant au moins un espace de fente (26).

10. Dispositif d'étanchéité (10) selon la revendication 9,
**caractérisé en ce que**
l'au moins une saillie (80) est insérée dans l'au moins un espace de fente (26).

11. Élément annulaire de support d'étanchéité (60) pour un dispositif d'étanchéité (10) selon l'une des revendications 1 à 10, dans lequel l'élément annulaire de support d'étanchéité (60) comprend au moins un élément corps annulaire (70) et au moins trois saillies (80) qui sont reliées d'un seul tenant à l'au moins un élément corps annulaire (70) et qui font saillie dans la direction radiale (R) du dispositif d'étanchéité (10) à partir de l'au moins un élément corps annulaire (70),
**caractérisé en ce que**
les au moins trois saillies (80) sont réalisées respectivement pour être insérées dans une ouverture (32) correspondante d'un composant d'aube directrice (20) du dispositif d'étanchéité (10) et ainsi pour recevoir le composant d'aube directrice (20) concerné et pour former un centrage par rayons, dans lequel centrage par rayons les au moins trois saillies (80) sont respectivement guidées radialement dans l'ouverture correspondante et l'élément annulaire de support d'étanchéité est maintenu par les guidages radiaux, qui ne sont pas fixés radialement, et l'élément annulaire de support d'étanchéité est centré à l'intérieur d'un plan perpendiculaire à l'axe de rotation de la turbomachine, dans lequel les saillies (80) sont bloquées contre un déplacement perpendiculaire à la direction radiale concernée.

12. Élément annulaire de support d'étanchéité (60) selon la revendication 11, dans lequel l'élément annulaire de support d'étanchéité (60) est réalisé comme un anneau fermé d'un seul tenant ou comprend un tel anneau et/ou comprend au moins trois saillies (80) ou au moins autant de saillies (80) qu'il y a de composants d'aubes directrices sous la forme de segments de grappe d'aubes directrices réalisés d'un seul tenant.

13. Turbomachine (100) comprenant au moins un dispositif d'étanchéité (10) selon l'une des revendications 1 à 10 et/ou au moins un élément annulaire de support d'étanchéité (60) selon la revendication 11 ou 12.

14. Turbomachine (100) selon la revendication 13,
**caractérisée en ce que**
la turbomachine (100) est réalisée sous la forme d'un moteur d'avion.
